(19) Europäisches Patentamt
European Patent Office
Office européen des brevets

(11) **EP 3 418 767 B1**

(12) # EUROPÄISCHE PATENTSCHRIFT

(45) Veröffentlichungstag und Bekanntmachung des Hinweises auf die Patenterteilung:
04.12.2019 Patentblatt 2019/49

(21) Anmeldenummer: **18176899.5**

(22) Anmeldetag: **11.06.2018**

(51) Int Cl.:
*G01S 7/487* (2006.01)    *G01S 7/486* (2006.01)
*G01S 17/10* (2006.01)   *G01S 17/89* (2006.01)
*G01S 17/42* (2006.01)

(54) **OPTOELEKTRONISCHER SENSOR UND VERFAHREN ZUR MESSUNG DER ENTFERNUNG ZU EINEM OBJEKT**

OPTOELECTRONIC SENSOR AND METHOD FOR MEASURING THE DISTANCE TO AN OBJECT

CAPTEUR OPTOÉLECTRONIQUE ET PROCÉDÉ DE MESURE DE LA DISTANCE PAR RAPPORT À UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2017   DE 102017113675**

(43) Veröffentlichungstag der Anmeldung:
**26.12.2018   Patentblatt 2018/52**

(73) Patentinhaber: **Sick AG**
**79183 Waldkirch (DE)**

(72) Erfinder:
• **Köhl, Martin**
**79183 Waldkirch (DE)**
• **Kienzler, Stefan**
**79183 Waldkirch (DE)**
• **Waslowski, Kai**
**79183 Waldkirch (DE)**
• **Zwölfer, Ulrich**
**79183 Waldkirch (DE)**
• **Thil, Christophe**
**79183 Waldkirch (DE)**

(56) Entgegenhaltungen:
**DE-A1-102007 013 714     US-A1- 2016 033 644**

• **MILSTEIN A B ET AL: "Acquisition algorithm for direct-detection ladars with Geiger-mode avalanche photodiodes", APPLIED OPTICS, OPTICAL SOCIETY OF AMERICA, WASHINGTON, DC; US, Bd. 47, Nr. 2, 10. Januar 2008 (2008-01-10), Seiten 286-311, XP001511081, ISSN: 0003-6935, DOI: 10.1364/AO.47.000296**
• **BEER MAIK ET AL: "Dead time effects in the indirect time-of-flight measurement with SPADs", 2017 IEEE INTERNATIONAL SYMPOSIUM ON CIRCUITS AND SYSTEMS (ISCAS), IEEE, 28. Mai 2017 (2017-05-28), Seiten 1-4, XP033155984, DOI: 10.1109/ISCAS.2017.8050357 [gefunden am 2017-09-25]**

**Beschreibung**

Die Erfindung betrifft einen optoelektronischen Sensor und ein Verfahren zur Messung der Entfernung zu einem Objekt in einem Überwachungsbereich nach dem Oberbegriff von Anspruch 1 beziehungsweise 14.

In einem entfernungsmessenden optoelektronischen Sensor wird über die reine Objekterfassung hinaus eine Distanz zu dem Objekt bestimmt. Mit Hilfe der Distanzinformation werden auch dreidimensionale Bilder oder sogenannte Tiefenkarten erfasst, wenn der Sensor ortsauflösend ist. Ein Scanner tastet dazu mit einem Lichtstrahl den Überwachungsbereich ab, während eine 3D-Kamera für jedes ihrer Pixel statt oder neben der Helligkeitsinformation auch eine Distanzinformation bestimmt. Dabei können die Pixel auch jeweils mehrere lichtempfindliche Elemente aufweisen, die gemeinsam zu einem Entfernungswert beitragen.

Ein herkömmliches Verfahren zur Distanzmessung ist die Lichtlaufzeitmessung. Dabei wird ein kurzer Lichtpuls ausgesandt und die Zeit bis zum Empfang einer Remission oder Reflexion des Lichtpulses gemessen. Um eine höhere Robustheit gegenüber Störereignissen und Raucheffekten zu gewinnen, ist beispielsweise aus DE 10 2007 013 714 A1 bekannt, nacheinander eine Vielzahl von Einzellichtpulsen auszusenden, die daraufhin erzeugten Empfangssignale in einem Histogramm zu sammeln und anschließend gemeinsam auszuwerten, etwa über eine Suche nach einem Maximum in dem Histogramm, aus dem der Empfangszeitpunkt abgeleitet wird.

Derartige Histogrammauswertungen benötigen viel Speicher, denn die gesamte im Messbereich zu erwartende Lichtlaufzeit wird in Bins unterteilt, deren Breite zumindest in der Nähe der angestrebten Messauflösung liegt. Soll die Entfernungsmessung ortsauflösend sein, wie in einer 3D-Kamera, so skaliert dieser Speicherbedarf noch mit der Anzahl Pixel, oder die Erfassungszeit steigt zur Vermeidung des erhöhten Speicherbedarfs durch sequentielle Verarbeitung der Pixel ganz erheblich an. Besonders hinderlich ist das für die Entwicklung kostengünstiger integrierter Auswertungsbausteine etwa in Form eines ASICs (Application Specific Integrated Circuit). Die zahlreichen Speicherzellen sind bei dem erläuterten Zählvorgang über Histogramme flächenbestimmend und zudem geschwindigkeitslimitierend.

Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Die hohe Empfindlichkeit der SPADs bringt auch Nachteile mit sich, da im Grenzfall schon ein einziges störendes Photon oder internes Rauschereignis das gleiche Signal liefert wie ein ausgeprägtes Nutzsignal. Außerdem ist das SPAD im Anschluss für eine gewisse Totzeit nicht ansprechbar, wobei diese Totzeit auf den kurzen Zeitskalen einer Lichtlaufzeitmessung faktisch bedeutet, dass ein SPAD dann erst wieder bei einer Messwiederholung verfügbar ist. Die herkömmlichen Verfahren zur Lichtlaufzeitmessung berücksichtigen diese Besonderheiten von SPADs nicht. Sie lassen sich daher zwar auf SPAD-Lichtempfänger übertragen, aber dabei bleibt Verbesserungspotential durch SPADs ungenutzt.

Aus der Arbeit von Milstein et al. "Acquisition algorithm for direct-detection ladars with Geiger-mode avalanche photodiodes", Applied optics 47(2), 2008, S. 296-311 ist ein Verfahren bekannt, um mit einem SPAD-Detektor Entfernungen zu einem Ziel zu messen. Dabei werden Histogramme von Laufzeiten gebildet und die Wahrscheinlichkeiten für ein erfasstes Ziel beziehungsweise eine Fehldetektion im jeweiligen Bin systematisch unter Berücksichtigung des Totzeitverhaltens von SPADs untersucht.

Der Artikel Beer, Maik, et al. "Dead time effects in the indirect time-of-flight measurement with SPADs", Circuits and Systems (ISCAS), 2017 IEEE International Symposium on, IEEE, 2017 stellt ein Messverfahren vor, bei dem ein auf den Zeitskalen der Lichtlaufzeitmessung langer Puls von 200 ns ausgesandt und der reflektierte Puls über drei Zeitfenster integriert wird, die jeweils der Pulsdauer entsprechen.

Es ist deshalb Aufgabe der Erfindung, die Lichtlaufzeitmessung mit einem SPAD-Lichtempfänger zu verbessern.

Diese Aufgabe wird durch einen optoelektronischen Sensor und ein Verfahren zur Messung der Entfernung zu einem Objekt in einem Überwachungsbereich nach Anspruch 1 beziehungsweise 14 gelöst. Mit einem Lichtsender werden Einzellichtpulse ausgesandt, nach Reflexion oder Remission an einem Objekt in einem Lichtempfänger wieder empfangen, und die Einzellichtlaufzeit wird bestimmt. Der Lichtempfänger weist mindestens eine im Geiger-Modus betriebene Lawinenphotodiode oder SPAD auf. Um einen verlässlichen Entfernungsmesswert zu erhalten, wird eine Vielzahl von Ein-zellichtlaufzeiten gemessen und daraus ein gemeinsamer Messwert bestimmt. Die Statistik wird über Zeit und/oder Ort gewonnen, nämlich durch Messwiederholungen mit mehreren aufeinanderfolgenden Einzellichtpulsen beziehungsweise indem der Lichtempfänger mehrere Lawinenphotodioden im Geigermodus aufweist.

Die Erfindung geht nun von dem Grundgedanken aus, bei der Unterscheidung von Mess- und Hintergrundereignissen das besondere statistische Verhalten von SPADs zu berücksichtigen. Dabei sind Messereignisse von Photonen des Einzellichtpulses verursacht, wohingegen Hintergrundereignisse alle übrigen Auslöser einer Lawine sind, wie Dunkelrauschen oder Fremdlichtempfang. Bei der Abschätzung, wie viele Einzellichtlaufzeiten aufgrund von Hintergrundereignissen in ein Zeitintervall fallen, wird ein exponentieller Abfall der noch verfügbaren Lawinenphotodioden unterstellt. Die übrigen Lawinenphotodioden befinden sich dann in ihrer Totzeit, in der sie sich noch nicht ausreichend von einer Lawine erholt haben. Der für den gemeinsamen Messwert gesuchte Empfangszeitpunkt liegt in einem Zeitintervall mit signifikant mehr Einzellichtlaufzeiten als durch Hintergrundereignisse zu erwarten. Damit ist zunächst der gemeinsame Messwert mit einer Messauflösung bestimmt, die der Breite des Zeitintervalls entspricht. In weiteren Auswertungsschritten kann die Messauflösung verfeinert werden.

Die Erfindung hat den Vorteil, dass sehr genau und auf die tatsächlichen Fremdlichtbedingungen abgestimmt das Zeitintervall aufgefunden wird, in dem das gesuchte Messereignis liegt. Herkömmlich werden dafür statische Schwellen herangezogen, die entsprechend konservativ gelegt sind und daher zu erheblichen Einbußen in Empfindlichkeit und Reichweite führen. Die Robustheit der Messung ist nicht nur gegenüber Fremdlicht erhöht, sondern auch anderen Schwankungen unterliegenden Sensoreigenschaften in Produktion und Betrieb des Sensors, wie beispielsweise der Apertur, der Intensität des Lichtsenders und damit der Einzellichtpulse und anderen. Schaltende Sensoren haben dementsprechend eine reduzierte Anfälligkeit für Fehlschalten.

Es ist möglich, mehrere hintereinander angeordnete teiltransparente Objekte aufzulösen, etwa ein Objekt hinter einer Glasscheibe, sofern deren Abstand größer ist als das betrachtete Zeitintervall. Es wird auch verhindert, dass Entfernungswerte im Fall mehrerer teiltransparenter oder mehrerer teilweise beleuchteter Objekte verfälscht werden, wie beispielsweise an Kanten eines Objekts, wenn Photonen sowohl des Objekts im Vordergrund als auch eines dahinter liegenden Objekts auf den Lichtempfänger treffen.

Weiterhin wird die Integration beispielsweise in einem ASIC vereinfacht, und dort wird weniger Fläche beansprucht. Zusätzlich zu deutlich reduzierbaren Speicheranforderungen können auch wesentliche Parameter zur Charakterisierung des Hintergrundes und des Empfangszeitpunkts sequentiell und daher effizient und genau bestimmt werden.

Die Auswertungseinheit ist bevorzugt dafür ausgebildet, eine auf das Aussenden eines Einzellichtpulses folgende Messperiode in Zeitintervalle zu unterteilen. Diese Zeitintervalle können als Bins eines Histogramms aufgefasst werden. Sie sind vorzugsweise jeweils gleich lang, um die Modellierung und Berechnung zu vereinfachen. Erfindungsgemäß wird dasjenige Zeitintervall aufgefunden, in dem ein Messereignis liegen muss, weil dort signifikant mehr Einzellichtlaufzeiten liegen als statistisch aufgrund von Hintergrundereignissen zu erwarten. Bei teiltransparenten Objekten oder Messereignissen am Rand eines Bins kann es auch mehrere solche Zeitintervalle geben.

Die Dauer der Zeitintervalle beziehungsweise die Binbreite ist ein Parameter, der es ermöglicht, eine Balance zwischen Genauigkeit der Messung und Aufwand zu finden. Neben Speicher- und Rechenaufwand ist auch die Bandbreite zu beachten, die zur Übertragung von Einzellichtlaufzeiten für die weitere Auswertung erforderlich ist. Das erfindungsgemäße Verfahren kann vor einer solchen Übertragung angewandt werden und dann, je nach Einstellung der Binbreite, eine erhebliche Datenkompression ermöglichen. Wie schon erwähnt, ist es möglich, nachgelagert den Empfangszeitpunkt innerhalb des gefundenen Zeitintervalls genauer zu bestimmen. Durch das schnelle Auffinden relevanter Bereiche steht bei gleicher Gesamtrechenleistung mehr Zeit für diese nachgelagerte Feinauswertung zur Verfügung, so dass eine sehr gute Gesamtperformance erreicht werden kann. Alternativ ergeben sich bei schneller Bewertung sehr hohe Messraten.

Die Auswertungseinheit ist bevorzugt dafür ausgebildet, die erwartete Anzahl von Einzellichtlaufzeiten in einem Zeitintervall mit einem Bernoulli-Modell abzuschätzen, in das die maximale Anzahl möglicher Einzellichtlaufzeiten in dem Zeitintervall und eine Hintergrundwahrscheinlichkeit eingeht, dass eine Einzellichtlaufzeit aufgrund eines Hintergrundereignisses in dem Zeitintervall liegt. Je nach Beginn des betrachteten Zeitintervalls bezüglich des Sendezeitpunktes steht ein gewisser Anteil von Lawinenphotodioden nicht mehr zur Verfügung. In dem Zeitintervall werden die verbleibenden Lawinenphotodioden mit einer gewissen Wahrscheinlichkeit allein aufgrund von Hintergrundereignissen aktiv. Die insgesamt noch verfügbaren Lawinenphotodioden und die genannte Wahrscheinlichkeit sind die Parameter des Bernoulli-Modells. Der Erwartungswert kann direkt als deren Produkt berechnet werden. So viele Einzellichtlaufzeiten sind folglich gemäß dem Bernoulli-Modell aufgrund von Hintergrundereignissen in dem Zeitintervall zu erwarten.

Die Auswertungseinheit ist bevorzugt dafür ausgebildet, aus dem Bernoulli-Modell auch eine Standardabweichung zu berechnen und damit zu bewerten, ob signifikant mehr Einzellichtlaufzeiten in einem Zeitintervall liegen als erwartet. Um einer Wurzelberechnung zu vermeiden, kann auch mit der Varianz gearbeitet werden, die in diesem Zusammenhang gleichbedeutend mit Standardabweichung verstanden wird. Die Berechnung der Standardabweichung ist mit den beiden im Vorabsatz genannten Parametern sehr einfach möglich. Daraus ist auch ein robustes Kriterium für signifikante Abweichungen von der Erwartung als Vielfaches der Standardabweichung möglich. Dieses Kriterium ist dynamisch und lokal auf das Zeitintervall angepasst und ermöglicht daher eine besonders empfindliche und zugleich robuste Messung.

Die Auswerteeinheit ist bevorzugt dafür ausgebildet ist, durch Vergleich der Anzahl der gemessenen Einzellichtlaufzeiten in einem Zeitintervall mit der aus dem Bernoulli-Modell erwarteten Anzahl von Einzellichtlaufzeiten in einem Zeitintervall zu bewerten, ob signifikant mehr Einzellichtlaufzeiten in einem Zeitintervall liegen als erwartet. Dabei entspricht die Anzahl der gemessenen Einzellichtlaufzeiten in einem Zeitintervall der für dieses Zeitintervall gemessenen Auslösewahrscheinlichkeit und die erwartete Anzahl von Einzellichtlaufzeiten in einem Zeitintervall der aus dem Bernoulli-Modell abgeleiteten Auslösewahrscheinlichkeit für den Hintergrund. Die Signifikanz der Abweichung wird in dieser Ausführungsform direkt auf Basis von Ereignissen bewertet. Das ist etwas ungenauer als mit einer Standardabweichung oder Varianz, dafür ist aber auch der Rechenaufwand geringer.

Die Bewertung weist vorzugsweise eine Hysterese auf, die stärkere Signifikanz verlangt, wenn in einem Zeitintervall bisher nicht signifikant mehr Einzellichtlaufzeiten festgestellt wurden und nun signifikant mehr Einzellichtlaufzeiten festgestellt werden sollen als für den umgekehrten Fall. Das lässt sich am besten am Beispiel eines schaltenden Sensors verstehen, der bei Anwesenheit eines Objekts in einem bestimmten Entfernungsbereich umschaltet. Dann wird für den Übergang von OFF nach ON ein größeres Vielfaches der Standardabweichung beziehungsweise ein größerer Unterschied zwischen gemessenen und erwarteten Ereignissen in einem Zeitintervall verlangt als für den umgekehrten Übergang.

Die Auswertungseinheit ist bevorzugt dafür ausgebildet, zur Berücksichtigung von Objekten in einer Entfernung nahe an der Grenze eines Zeitintervalls mindestens zwei benachbarte Zeitintervalle gemeinsam auszuwerten. Auch die Messereignisse unterliegen einer gewissen Streuung und können daher zufällig in benachbarten Zeitintervallen beitragen. Die Messung wird robuster, wenn dieser Fall berücksichtigt ist.

Die Auswertungseinheit ist bevorzugt dafür ausgebildet, Einzellichtpulse mit einer Verzögerung auszusenden, um für eine Anfangsphase deren Empfang auszuschließen und so abzuschätzen, wie viele Einzellichtlaufzeiten aufgrund von Hintergrundereignissen in einem Zeitintervall zu erwarten sind. Damit wird die exponentiell abfallende Häufigkeit, die für Hintergrundereignisse angenommen wird, durch Messung parametriert. Die Verzögerung stellt sicher, dass es in einem Anfangszeitraum der Messperiode nur Hintergrundereignisse gibt. Das ließe sich auch dadurch sicherstellen, dass in einem Nahbereich vor dem Sensor für einen Mindestabstand sämtlicher Objekte gesorgt wird. Eine weitere Alternative ist eine Hintergrundmessung bei inaktivem Lichtsender.

Die Auswertungseinheit ist dafür ausgebildet, Parameter zur Beschreibung der exponentiell abfallenden Häufigkeit von Hintergrundereignissen für mehrere Zeitintervalle zu bestimmen, ein Quantil dieser Parameter zu bestimmen, insbesondere den Median, und der weiteren Abschätzung der Häufigkeit von Hintergrundereignissen den Parameter entsprechend diesem Quantil zu Grunde zu legen. Dieses Vorgehen hat den Vorteil, dass der Hintergrund ohne jegliche besonderen Maßnahmen geschätzt wird, mit denen die Messereignisse ausgeschlossen werden. Es gibt also keine Zusatzmessungen oder von Messereignissen freigehaltene Zeiträume.

Dazu wird mindestens ein Parameter zur Charakterisierung des Hintergrundes in mehreren oder sogar allen Bins beziehungsweise Zeitintervallen einer Messperiode bestimmt. Zur Charakterisierung eignet sich die Zeitkonstante des exponentiellen Abfalls oder eine ihr entsprechende Größen. Der Parameter bestimmt auch unmittelbar die Hintergrundwahrscheinlichkeit für das Bernoulli-Modell. Für Bins mit Messereignissen sind die Parameter teilweise erheblich verfälscht. Unter der Voraussetzung, dass der Lichtfleck des Einzellichtpulses nur einen Teil der Lawinenphotodioden treffen kann, betreffen Messereignisse aber niemals alle Lawinenphotodioden. Deshalb können durch Ordnungsstatistik, nämlich Abschneiden bei einem Quantil und insbesondere dem Median, die von Messereignissen verfälschten Parameter ausgeschlossen werden. Dabei ist sicher zu stellen, dass Zeitintervalle, an deren Ende beispielsweise bei zu hohem Fremdlicht oder sehr hoher Signalintensität die Zahl der verfügbaren Lawinenphotodioden zu gering ist, in der Auswertung nicht berücksichtigt werden.

Die Parameter in einem Zeitintervall werden bevorzugt aus einem Quotienten der gemessenen Einzellichtlaufzeiten in dem Zeitintervall zu der maximalen Anzahl möglicher Einzellichtlaufzeiten in dem Zeitintervall bestimmt. Ohne Messereignisse ist bei idealem Hintergrundverhalten aufgrund von Eigenschaften der Exponentialfunktion das Verhältnis von auslösenden Lawinenphotodioden zu noch verfügbaren Lawinenphotodioden in jedem Zeitintervall konstant. Zeitintervalle mit Messereignissen werden durch das Quantil beziehungsweise den Median ausgeschlossen und gleichzeitig der Fehler gegenüber einer Einzelmessung deutlich reduziert. Daher ist dies ein einfaches und robustes Vorgehen zum Schätzen der Zeitkonstante oder eines dazu äquivalenten Parameters.

Der Lichtempfänger weist bevorzugt eine Vielzahl in einem Geiger-Modus betriebener Lawinenphotodioden und mehrere den Lawinenphotodioden einzeln oder gruppenweise zugeordnete Einzellichtlaufzeitmesseinheiten auf. Die Lawinenphotodioden sind dabei vorzugsweise linien- oder matrixartig angeordnet. Es gibt dann verschiedene Varianten der Verschaltung. Die Lawinenphotodioden können insgesamt einen gemeinsamen Messwert liefern. Es ist aber auch möglich, eine Ortsauflösung zu erhalten, indem mehrere Lawinenphotodioden als Gruppe je einen gemeinsamen Messwert bestimmen. Das ergibt dann einen 3D-Bildsensor, dessen effektive örtliche Auflösung der Anzahl von Gruppen entspricht, wobei die Gruppengröße eine Austauschbeziehung von örtlicher Auflösung, Genauigkeit und Messzeit der Entfernungsbestimmung ermöglicht. Dabei werden Einzellichtlaufzeiten wahlweise für jede Lawinenphotodiode oder nur gemeinsam für mehrere Lawinenphotodioden gemessen. Die Einzellichtlaufzeitmesseinheiten können fest oder variabel bestimmten Lawinenphotodioden zugeordnet sein.

Die Einzellichtlaufzeitmesseinheiten weisen bevorzugt einen TDC (Time-to-Digital-Converter) auf. Das ist ein bekanntes und relativ einfaches Bauteil, das mit hoher zeitlicher Auflösung Einzellichtlaufzeiten bestimmen kann. Der TDC wird vorzugsweise zum Sendezeitpunkt gestartet und zum Empfangszeitpunkt durch den empfangenen Einzellichtpuls gestoppt.

Die Auswertungseinheit ist bevorzugt dafür ausgebildet, für zumindest einige Zeitintervalle einen Mittelwert der Einzellichtlaufzeiten in dem jeweiligen Zeitintervall zu bestimmen. Dieser Mittelwert kann für eine Verbesserung der Messauflösung in nachfolgenden Auswertungsschritten verwendet werden.

Die Auswertungseinheit ist bevorzugt dafür ausgebildet ist, den gemeinsamen Messwert rekursiv durch Verfeinerung von Zeitintervallen, in denen signifikant mehr Ein-zellichtlaufzeiten liegen als erwartet, mit zunehmend feinerer Auflösung zu bestimmen. Durch das erfindungsgemäße Auffinden eines Zeitintervalls mit dem Messereignis ist die Messauflösung im ersten Schritt auf die Breite des Zeitintervalls beschränkt. Die Messauflösung lässt sich rekursiv verbessern, indem das Verfahren nur in der lokalen Umgebung des bisherigen gemeinsamen Messwerts wiederholt wird. Dadurch muss nur ein kleinerer Zeitbereich ausgewertet werden, und dies wird dazu genutzt, im Gegenzug mit feineren Zeitintervallen zu arbeiten, wodurch sich die Messauflösung sukzessive erhöht. Die Rekursion kann beispielsweise nach einer vorgegebenen Anzahl von Schritten beziehungsweise Messungen oder bei Erreichen einer gewünschten Messauflösung abgebrochen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    ein Blockdiagramm eines Messkerns zum Bestimmen der Lichtlaufzeit aus einer Folge von Einzellichtpulsen;

Fig. 2    ein beispielhaftes Histogramm einer Vielzahl mit Einzelpulsen gemessener Lichtlaufzeiten; und

Fig. 3    ein beispielhaftes Histogramm der Verteilung der Einzellichtlaufzeiten bei einer Messung (schwarz) im Vergleich zu einer erwarteten Verteilung von Hintergrundereignissen (weiß).

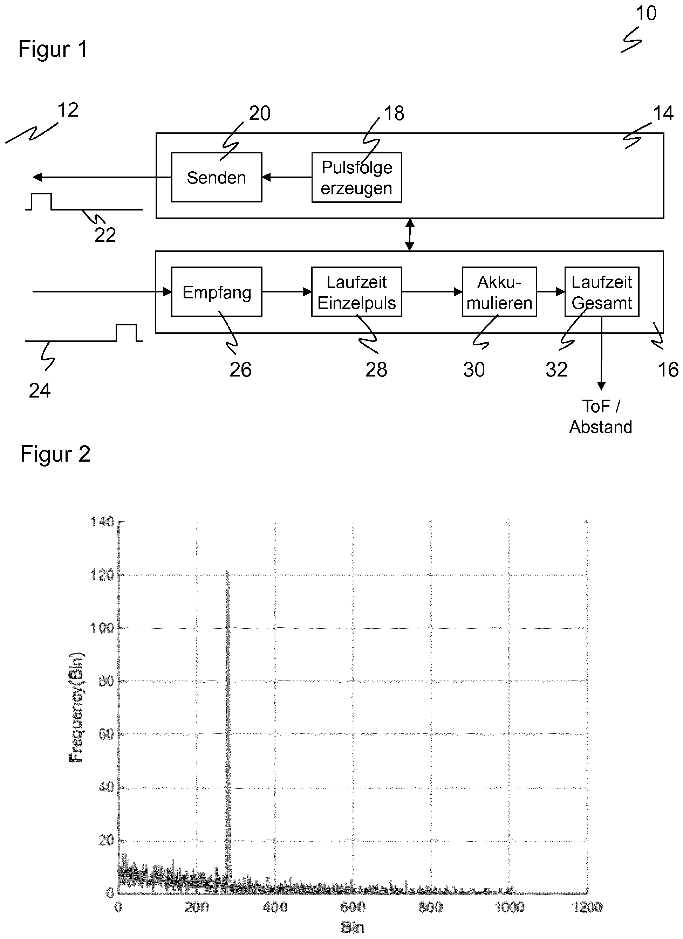

Figur 1 zeigt eine vereinfachte Blockdarstellung eines Sensors 10 zur Bestimmung des Abstands zu einem Objekt in einem Überwachungsbereich 12 durch Messung von Lichtlaufzeiten. Der Sensor 10 ist in Figur 1 in einen oberen Sendepfad 14 und einen unteren Empfangspfad 16 geteilt. Diese Teilung soll keine technischen Eigenschaften implizieren. Die Erfindung bezieht sich in erster Linie auf den Empfangspfad 16, so dass für den Sendepfad 14 jede bekannte Implementierung denkbar ist. Die Elemente des Sendepfades 14 können eigene Bausteine sein, aber auch mit den Elementen des Empfangspfades 16 auf einem gemeinsamen Baustein integriert werden.

In dem Sendepfad 14 werden mit einem Pulsgenerator 18 kurze Einzelpulse erzeugt. Die Pulsformen, -pausen und -längen können dabei variiert werden, beispielsweise für eine Codierung oder Anpassung an Umgebungsverhältnisse. Für die Belange der Erfindung genügt jedoch die einfachere Vorstellung einer gleichmäßigen Sequenz von Einzelpulsen, die untereinander genügend zeitlichen Abstand haben, damit sich die Messungen untereinander nicht beeinflussen. Ein Lichtsender 20, beispielsweise eine LED oder Laserdiode, erzeugt aus dem elektronischen Sendesignal entsprechende Einzellichtpulse 22, die in den Überwachungsbereich 12 ausgesandt werden. Treffen die Einzellichtpulse 22 dort auf ein Objekt, so kehrt ein entsprechender reflektierter oder remittierter Einzellichtpuls 24 zu dem Sensor 10 zurück und trifft auf einen Lichtempfänger 26, der daraus ein elektronisches Empfangssignal erzeugt.

Der Lichtempfänger 26 weist nicht dargestellte Lawinenphotodioden auf, insbesondere eine große Anzahl Lawinenphotodioden in Linien- oder Matrixanordnung. Dabei kann eine Ortsauflösung erhalten bleiben und so ein 3D-Bildsensor entstehen, wobei durch gemeinsame Auswertung mehrerer Lawinenphotodioden eine reduzierte Ortsauflösung bei genauerer Entfernungsmessung erreichbar ist. Im Extremfall werden alle Lawinenphotodiodenelemente für die Bestimmung eines gemeinsamen Messwerts herangezogen. Die Lawinenphotodioden werden wie einleitend schon kurz beschrieben in einem Geiger-Modus betrieben und auch als SPADs bezeichnet. Die Lawinenphotodioden oder APDs (Avalanche Photo Diode) sind oberhalb ihrer Durchbruchsspannung vorgespannt, und der Lawinenstrom kann schon durch ein einziges Photon ausgelöst werden. SPADs sind daher extrem sensitiv, zugleich aber auch anfällig für Fehlmessungen, denn eine durch eine SPAD bestimmte Lichtlaufzeit kann fehlerhaft auf Dunkelrauschen oder die Registrierung eines Fremdlichtphotons zurückgehen und dann gänzlich unkorreliert mit dem Abstand des Objekts sein. Außerdem steht eine Lawinenphotodiode nach einer Lawine für eine Totzeit nicht mehr zur Verfügung. Der erfindungsgemäße statistische Ansatz zur Auswertung einer Vielzahl von Einzelereignissen mit Charakterisierung und Unterscheidung von Hintergrundereignissen ist auf diese Eigenschaften der SPADs angepasst.

Als ersten Auswertungsschritt bestimmt eine Einzellichtlaufzeitmesseinheit 28 die jeweilige Einzellichtlaufzeit zwischen Aussenden eines Einzellichtpulses 22 und Empfangen des zugehörigen remittierten Einzellichtpulses 24. Es können mehrere Einzellichtlaufzeitmesseinheiten 28 vorgesehen sein, die fest oder dynamisch bestimmten Lawinenphotodioden oder Gruppen davon zugeordnet sind. Beispielsweise ist dafür ein Block von TDCs (Time-to-Digital-Converter) vorgesehen, wobei der jeweilige TDC mit Aussenden eines Einzellichtpulses gestartet wird und durch ein von der Lawine in einer zugeordneten Lawinenphotodiode erzeugtes Signal gestoppt wird. Die Betriebsart der TDCs ist nicht festgelegt, beispielsweise ist eine andere mögliche Betriebsart der sogenannte common stop mode, in dem das Signal der Lawinenphotodiode den jeweiligen TDC startet und alle TDCs gemeinsam beispielsweise am Ende einer Messperiode angehalten werden.

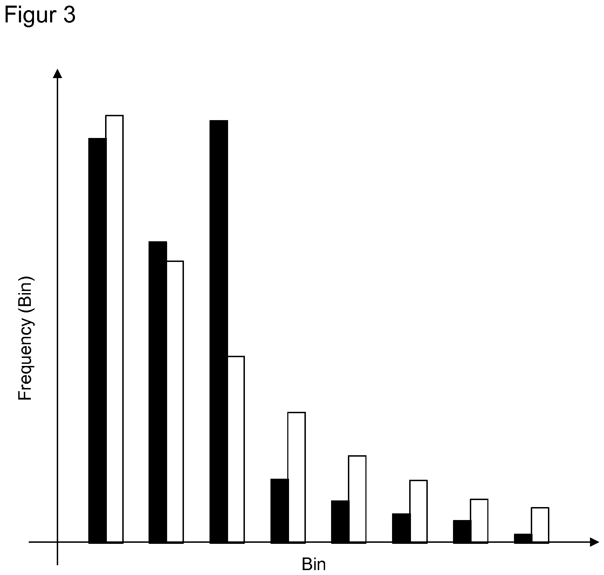

Weitere Auswertungsschritte sind in Figur 1 nur rudimentär dargestellt und werden erst weiter unten unter Bezugnahme auf Figur 3 genauer erläutert. Ganz grob werden zunächst die Einzellichtlaufzeiten in einem Speicher 30 gesammelt. Das kann bereits zusammenfassend geschehen, beispielsweise in einem Histogramm mit einer Binbreite, die unter Berücksichtigung der gewünschten Auflösung und des Speicherbedarfs gewählt ist, oder es werden direkt fortlaufend gewisse statistische Größen wie der Mittelwert, der Mittelwert pro Bin oder die Anzahl von Einzellichtlaufzeiten und dergleichen gebildet. Die Einzellichtlaufzeiten werden dann gemeinsam in einem Messwertblock 32 ausgewertet, um letztlich den Abstand zu dem Objekt zu gewinnen.

In einer bevorzugten Ausführungsform ist zumindest der Empfangspfad 16 auf einem ASIC integriert. Dabei können eigene Blöcke für den Lichtempfänger 26 einerseits und die Auswertungsschaltungen 28, 30, 32 andererseits vorgesehen sein. Vorzugsweise sind jedoch zumindest jeweilige Einzellichtlaufzeitmesseinheiten 28 direkt bei dem Lichtempfänger 26 angeordnet und bilden mit einzelnen Lawinenphotodioden oder Gruppen davon intelligente Pixel. Auch der Akkumulator 30 und der Messwertblock 32 können in diese Pixel integriert werden. Eine übergeordnete Steuerung entscheidet dann, ob und wie die Messergebnisse der Pixel ortsaufgelöst genutzt oder nochmals gemittelt werden. In einer weiteren Ausführungsform wird ein FPGA (Field Programmable Gate Array) eingesetzt, auf dem der Akkumulator 30 und/oder der Messwertblock 32 und gegebenenfalls auch die Einzellichtlaufzeitmesseinheit 28 implementiert ist.

Figur 1 zeigt nur die für die eigentliche Messung relevanten Bestandteile des optoelektronischen Sensors 10. Weitere in der Praxis notwendige und an sich bekannte Elemente wie eine Sende- oder Empfangsoptik wurden der besseren Übersicht halber weggelassen. Der Sensor 10 kann ein einfacher Taster sein, der auf einer Achse den Objektabstand misst und dann beispielsweise einen kontinuierlichen Zahlenwert für die Entfernung ausgibt, oder der Sensor 10 fungiert als Schalter, dessen Schaltzustand je nach An- oder Abwesenheit eines Objekts in einem vorgebbaren Entfernungsbereich wechselt. Die Achse des Tasters kann durch entsprechende Drehspiegel oder als insgesamt rotierender Messkopf in Drehbewegung versetzt werden und bildet dann einen Scanner. Eine weitere beispielhafte Ausführungsform des Sensors 10 ist eine 3D-Kamera.

Figur 2 zeigt zur Illustration ein beispielhaftes Histogramm einer Vielzahl von Ein-zellichtlaufzeiten. Dabei sind die Bins auf der X-Achse Zeitintervalle möglicher Lichtlaufzeiten, hier in beliebigen Einheiten und in hoher Auflösung, d.h. mit kleiner Binbreite. Die Y-Achse stellt die zugehörige Anzahl erfasster Einzellichtlaufzeiten dar. Das Histogramm ist also insgesamt eine Verteilung der gemessenen Einzellichtlaufzeiten.

Das Histogramm zeigt in diesem Fall ein eindeutiges Maximum, das mit bloßem Auge ungefähr im 270sten Bin erkannt wird und sich klar vom Hintergrund der durch Dunkelrauschen, Fremdlicht und andere Störeffekte verursachten Einzellichtlaufzeiten abhebt. Das Maximum könnte mit einer Schwellbewertung gefunden und daraus der Abstand des Objekts ermittelt werden. Allerdings erfordert das erheblichen Speicherbedarf für das hochaufgelöste Histogramm, besonders wenn man sich vorstellt, dass ein derartiges Histogramm in einem 3D-Bildsensor für jedes Pixel gespeichert werden müsste. Außerdem ist die Situation in Figur 2 insofern sehr einfach, als das Maximum sehr klar aus dem Hintergrund heraussticht. Das ist bei einer realen Messung insbesondere bei schwach remittierenden oder weit entfernten Objekten keineswegs der Fall.

Daher erfolgt erfindungsgemäß eine besondere Auswertung, die den Hintergrund unter Berücksichtigung der besonderen Eigenschaften von SPADs charakterisiert und das Messereignis anhand von signifikanten Abweichungen von diesem Hintergrund lokalisiert. Das geschieht vorzugsweise auch nicht auf dem vollen, hochaufgelösten Histogramm, um die Auswertung mit deutlich weniger Ressourcen wie Speicher, Rechenleistung und Bandbreite für Datenübertragung durchführen zu können. Der Messwert ist dann zunächst nur mit einer Auflösung entsprechend der größeren Binbreite bestimmt. Optional kann dann nur in der lokalen Umgebung des Messwertes eine weitere Messung und/oder Auswertung folgen, um die Auflösung zu verbessern. Beispielsweise kann das erfindungsgemäße Verfahren rekursiv angewandt werden, wobei der im Schritt k gefundene Bereich den Gesamtbereich der (k+1)-ten Messung darstellt, gegebenenfalls vergrößert um einen Sicherheitspuffer.

Figur 3 zeigt ein beispielhaftes Histogramm, das nicht in seiner vollen Auflösung gespeichert wird, sondern nur in einer groben Unterteilung der Messperiode in $N_S$ Zeitintervalle oder Bins. In diesem Beispiel sind es $N_S$ = 8 disjunkte äquidistante Zeitbereiche von $t_i$ bis $t_{i+1}$. Zu jedem Bin wird zumindest die Anzahl der Einzellichtlaufzeiten oder Ereignisse $N_{i+1}$, $0 \leq i < N_S$ gespeichert, die in das Bin und damit das Zeitintervall $t_i$ bis $t_{i+1}$ fallen. Diese Anzahl ist auch die auf der Y-Achse in Figur 3 aufgetragene Größe, wobei schwarze Balken eine beispielhafte Messung mit Objekt und weiße Balken zum Vergleich eine Messung ohne Objekt oder von dem Lichtsender 20 ausgesandte Einzellichtpulse 22 zeigen, also den Hintergrund. Es ist möglich, zu den Bins weitere Größen zu bestimmen und zu speichern, beispielsweise den Mittelwert $m_{i+1}$ der Einzellichtlaufzeiten in einem Bin.

Das Histogramm entsteht aus einer Anzahl von $N_M$ Messungen, in denen jeweils ein Einzellichtpuls 22 ausgesandt und ein remittierter Einzellichtpuls 24 empfangen wird, und zwar in $N_P$ Lawinenphotodioden, so dass insgesamt ein Pool von bis zu $N_0 = N_M N_P$ Messereignissen verfügbar ist. Die entsprechenden Einzellichtlaufzeiten werden den Bins zugeordnet und erhöhen dort die Anzahl (Frequency, Count).

Wie in dem Beispiel der Figur 3 gut erkennbar, erhöht das Messsignal die Anzahl in dem zugehörigen Bin, hier dem dritten Bin. Allerdings ist die absolute Anzahl kaum höher als im ersten Bin, zu dem das Messsignal gar nicht beiträgt. Eine absolute Schwelle wäre also kein gutes Mittel, um das Bin mit dem Messsignal aufzufinden. Deshalb wird erfindungsgemäß der erwartete Hintergrund je Bin geschätzt und berücksichtigt. Folglich muss die Auswertung zwei Hauptschritte leisten: Eine Charakterisierung des Hintergrundes und eine Erkennung von signifikanten Abweichungen von diesem erwarteten Hintergrund. Dadurch lässt sich das dritte Bin im Beispiel der Figur 3 aufspüren. Über die Zeitgrenzen des Bins ergibt sich so bereits ein Messwert für die Entfernung des erfassten Objekts. Es ist auch denkbar, innerhalb des gefundenen Bins eine genauere Messung oder Auswertung anzuschließen.

Für die Charakterisierung des Hintergrundes wird ein exponentieller Abfall vorausgesetzt, wie ihn die weißen Balken in Figur 3 zeigen. Um die Parameter des exponentiellen Abfalls zu bestimmen, können lokale Modelle oder Messungen bei ausgeschaltetem Lichtsender 20 herangezogen werden, die unten noch näher erläutert werden. Der exponentielle Abfall rührt daher, dass SPADs nach einer Lawine eine Totzeit haben und sich deshalb die Population von jeweils verfügbaren Lawinenphotodioden für den Rest des zugehörigen Bins und die nachfolgenden Bins entsprechend reduziert. Dabei kann eine Totzeit zusätzlich zu der physikalisch inaktiven Zeit zur Erholung nach einer Lawine auch schaltungstechnische Gründe haben, etwa eine Konfiguration der Lichtlaufzeitmessung (TDC mit "store first event until reset").

Liegt damit eine Erwartung an den Hintergrund vor, so lässt sich eine erhöhte Anzahl $N_i$ von Einzellichtlaufzeiten in einem Bin erkennen und in Form eines Parameters $S_i$ quantifizieren. Überschreitet $S_i$ eine Schwelle $S_D$, die vorzugsweise für die Bins individuell bestimmt ist, so ist ein Objekt in dem entsprechenden Bin erfasst. Es kann auch mehrere Segmente mit $S_i \geq S_D$ geben. Das entspricht dann einer Mehrzielerfassung bei Kantentreffern oder halbtransparenten Objekten, und vorzugsweise wird dann nur eine Untermenge weiter betrachtet, wie das größte $S_i$, das die Bedingung $S_i \geq S_D$ erfüllt ("stärkstes Objektsignal"), oder das $S_i$ mit dem kleinsten Index i, das die Bedingung $S_i \geq S_D$ erfüllt ("nahestes Objekt"). Es ist auch möglich, dass das Maximum des Messsignals dicht an oder auf einer Grenze zweier Bins liegt und somit Beiträge zu beiden angrenzenden Bins liefert. Deshalb werden vorzugsweise benachbarte Bins mit betrachtet, um eine stabile Auswertung und hohe Genauigkeit auch für diesen Fall zu gewährleisten. Das kann bereits in der Berechnung der Parameter $S_i$ berücksichtigt werden.

Wie in Figur 3 zu sehen, ist die Anzahl der Einzellichtlaufzeiten in dem auf das Maximum folgenden vierten Bin stark reduziert und liegt deutlich unterhalb des Hintergrundes. Das liegt daran, dass Lawinenphotodioden, die das Maximum erfassen, danach wegen der bereits erwähnten Totzeiten nicht mehr verfügbar sind. Es schließt sich über die weiteren Bins ein exponentieller Abfall entsprechend dem Hintergrund, jedoch auf dem niedrigeren Niveau an. Das Bin mit dem Maximum kann folglich alternativ oder zusätzlich auch als Vorgänger desjenigen Bins erkannt werden, hier des vierten Bins, in dem die Anzahl von Lichtlaufzeiten abrupt unter den Hintergrund fällt.

Damit sind die beiden Hauptschritte Charakterisierung des Hintergrundes und Erkennung von signifikanten Abweichungen grob erläutert. Das Ergebnis ist, dass das Bin erkannt ist (ROI, Region of Interest), in das der Empfangszeitpunkt fällt. Durch die Zeitgrenzen des Bins ist damit auch im Rahmen der Auflösung des Histogramms die Lichtlaufzeit bestimmt. Es kann sich eine genauere Auswertung basierend auf den Informationen des gefundenen Bins und gegebenenfalls seiner Nachbarn anschließen, um in einem iterativen oder nicht-iterativen Verfahren den Empfangszeitpunkt messtechnisch oder rechnerisch genauer zu bestimmen. Dazu können beispielsweise die Informationen $N_i$, $N_{i+1}$, $m_i$ und $m_{i+1}$ des gefundenen Bins und seines Nachbarn genutzt werden. In einer möglichen Ausführung kann beispielsweise der Mittelwert $m_i$ des gefundenen Bins i als Entfernungswert genutzt werden. Daher soll der Messwertblock 32 oder eine andere Auswertungsschaltung auch diese Mittelwerte bestimmen können. Möglich ist auch, die Messung fortzusetzen oder zu wiederholen, nun aber das Histogramm nur noch in einer Umgebung der bisher gemessenen Entfernung und dafür mit besserer Auflösung zu bilden. An die Bestimmung eines gemeinsamen Messwerts für den Objektabstand können sich Messwiederholungen anschließen, um dann einen Mittelwert oder Median aus n Messwerten zu bilden.

Im Folgenden werden die beiden Hauptschritte noch in vorteilhaften Ausführungsformen im Detail vorgestellt.

*Charakterisierung des Hintergrundes*

Wegen Totzeiten von SPADs wird angenommen, dass der Hintergrund zumindest abschnittsweise einer Exponentialverteilung folgt. Deren Parameter sollen aus den Einzellichtlaufzeiten und insbesondere einem Histogramm bestimmt werden, wie dies beispielhaft in Figur 3 gezeigt ist.

Ein Ansatz besteht darin, dafür zu sorgen, dass zumindest einige Bins des Histogramms frei von Messereignissen sind. Dazu kann eine separate Messung bei inaktivem Lichtsender 20 durchgeführt werden. Dann enthalten alle $N_S$ Bins nur Informationen über den Hintergrund. Um eine separate Messung zu vermeiden, ist auch denkbar, den Lichtsender 20 erst mit einer gewissen Verzögerung gegenüber dem Lichtempfänger 26 zu aktivieren, womit dann sichergestellt ist, dass die ersten Bins nur Hintergrundereignisse erfassen. Das gleiche Ergebnis lässt sich erreichen, indem Objekte einen definierten Mindestabstand zum Sensor 10 einhalten müssen, dann kann die verzögerte Aktivierung des Lichtsenders 20 entfallen.

Hierbei ist implizit vorausgesetzt, dass die Lawinenphotodioden jeweils nur für die Messung aktiviert werden, beispielsweise indem erst dann eine Vorspannung oberhalb der Durchbruchspannung angelegt wird. Andernfalls befindet sich schon bei Beginn der Messung ein nicht unerheblicher Anteil der Lawinenphotodioden in der Totzeitphase. Damit wäre eine Messung und auch das hier beschriebene Verfahren weiterhin möglich, jedoch würde der Gesamtpool $N_P$ an verfügbaren Lawinenphotodioden effektiv herabgesetzt, und der Sensor 10 verlöre unnötig Empfindlichkeit.

Es ist zwar konzeptionell besonders einleuchtend, den Hintergrund aus Bins zu bestimmen, die nur aus Hintergrundereignissen gefüllt wurden. Der Hintergrund lässt sich aber auch aus einem Histogramm mit Messereignissen schätzen, was den Vorteil hat, dass keine eigene Messzeit für die Bestimmung des Hintergrundes erforderlich ist. Außerdem verlieren eventuelle Hintergrundschwankungen auf kurzen Zeitskalen an Einfluss, weil Bestimmung des Hintergrundes und die Messung auf denselben Daten basiert.

In einer entsprechenden Ausführungsform zur dynamischen Hintergrundschätzung werden Hintergrundparameter für $N_B$ Bins, $N_B \leq N_S$, geschätzt, zunächst ungeachtet der Tatsache, dass die Hintergrundparameter aus Bins mit Messereignissen dafür an sich ungeeignet sind. $N_S$ bezeichnet die Anzahl aller Bins. Die Wahl von $N_B$ ist das Ergebnis einer Abwägung zwischen Genauigkeit und Rechenaufwand der Hintergrundschätzung. Die genaue Auswahl der $N_B$ Bins ist unkritisch: häufig wird beispielsweise jedes q-te Bin, $1 \leq q$, der $N_S$ Bins gewählt, oder die ersten q Bins. Um den Hintergrund zu charakterisieren, wird Ordnungsstatistik genutzt. Konkret wird für die $N_B$ für den Hintergrund geschätzten Parameter ein Quantil gebildet. Nimmt man beispielsweise an, dass der Anteil der $N_B$ Bins, auf die ein von dem Lichtsender 20 ausgesandter Einzellichtpuls 22 einwirkt, kleiner als $N_B/2$ ist, so lässt sich der Hintergrund durch Bildung des Medians aller $N_S$ geschätzten Werte für den Hintergrund bestimmen. Erwartet man, dass ein bestimmter Anteil a der $N_B$ Bereiche durch Anwesenheit eines Objekts im Überwachungsbereich 12 nicht nur durch Hintergrund beeinflusst werden, kann man auch ein anderes Quantil als den Median, beispielsweise das (50%-a/2)-Quantil wählen, um diesen Anteil a zu kompensieren. Bei diesem Vorgehen sollten vorzugsweise Bereiche ausgeschlossen werden, an deren zeitlichem Ende beispielsweise wegen zu starkem Nutzsignal oder Fremdlicht nicht mehr genügend Lawinenphotodioden für die lokale Hintergrundschätzung verfügbar sind.

Der Hintergrund ohne Signalphotonen ist durch eine Exponentialverteilung

$$F(Bin) = N_0 \exp( - decayBackground * Bin)$$

beschrieben, deren Parameter $N_0 = N_M N_P$ als Produkt der Anzahl $N_M$ der ausgesandten Einzellichtpulse 22 und Anzahl $N_P$ der gleichzeitig mit mehreren Lawinenphotodioden bestimmbaren Einzellichtlaufzeiten von Anfang an bekannt ist. Der Parameter decayBackground, also die Zeitkonstante des exponentiellen Abfalls, bestimmt sich aus Faktoren wie dem Dunkelrauschen und dem Fremdlicht und wird aus dem Histogramm bestimmt. Es sei an dieser Stelle darauf hingewiesen, dass weder die zeitliche Unterteilung der Bins fest sein muss, sondern adaptiv angepasst werden kann, noch die gleiche Verteilungsfunktion global über den gesamten Hintergrund angenommen werden muss. Entscheidend ist nur, dass der Hintergrund lokal, also in der Umgebung einiger weniger Bins durch wenige Parameter charakterisiert werden kann und diese Parameter entsprechend den oben geschilderten Messszenarien bestimmt werden können.

Es wäre denkbar, decayBackground direkt zu schätzen und damit zu arbeiten, was aber den Nachteil hat, dass aufwändige Logarithmus-Berechnungen erforderlich sind. Wegen der Exponentialverteilung ist das Verhältnis von durch Hintergrundereignisse ausgelösten Lawinen und noch verfügbaren Lawinenphotodioden pro Zeit konstant (Skalenfreiheit der Exponentialfunktion). Für eine äquidistante zeitliche Unterteilung gilt dies auch in den jeweiligen Bins, sieht man von Rauschen und Diskretisierungsartefakten ab. Dieses Verhältnis lässt sich mit sehr wenig Aufwand für jedes Bin berechnen, um die Exponentialverteilung lokal zu charakterisieren und wird daher bevorzugt verwendet.

Sei also $F_i$ die Zahl der Lawinenphotodioden, die vor dem Zeitpunkts $t_{i-1}$ noch nicht aktiv waren. Das entspricht in einem Bin der Anzahl maximal möglicher Messereignisse $N_0$ minus die kumulierten Anzahlen der früheren Bins. Dann wird für jedes Bin das Verhältnis berechnet, das den exponentiellen Abfall charakterisiert:

$$pTrigger[Bin] = (Anzahl[Bin]+Regularisierung) / F_i[Bin].$$

Um Divisionen zu vermeiden, kann eine Lookup-Table in Kombination mit einer Multiplikation verwendet werden. Der zusätzliche Term "Regularisierung≥0" dient der Reduzierung von Diskretisierungsartefakten. In der Praxis kann "Regularisierung = 1" oder ein Wert in dieser Größenordnung gewählt werden.

Wie oben erläutert, kann ein Histogramm verwendet werden, welches auch Mess-ereignisse enthält. Dann wird noch ein Quantil, insbesondere der Median pTriggerMedian über das Array pTrigger[Bin] gebildet. Sofern nur Bins ohne Mess-ereignisse eingehen, kann alternativ auch ein anderes gemeinsames Maß wie der Mittelwert genutzt werden, und prinzipiell ist dann schon jedes einzelne pTrigger[Bin] ein Schätzwert zur Charakterisierung des Hintergrundes.

*Erkennung von signifikanten Unterschieden zum Hintergrund*

Grundlage für die Bewertung der Unterschiede zum Hintergrund ist die Differenz der Anzahlen von tatsächlich in einem Bin gemessenen und aufgrund des Hintergrundes erwarteten Einzellichtlaufzeiten. Das ist im Beispiel der Figur 3 sofort nachvollziehbar als das Stück, um das sich die schwarzen Balken von den weißen Balken unterscheiden. Die Betrachtung kann sich aber auch über einige benachbarte Bins zugleich erstrecken. Die Vergleichswerte des Hintergrunds (weiße Balken) können aus einer Referenzmessung bei inaktivem Lichtsender 20 stammen, oder sie werden gemäß der im vorangegangenen Abschnitt erläuterten Exponentialverteilung geschätzt. Konkret muss dazu lediglich pTriggerMedian*$F_i$[Bin] berechnet werden.

Die jeweilige Differenz kann in einer einfachen Ausführungsform mit einer absoluten Schwelle verglichen werden. Etwas genauer ist eine relative Schwelle, welche beispielsweise einen gewissen Anteil von $N_0$, $F_i$[Bin] (weißer Balken) oder Anzahl[Bin] (schwarzer Balken) fordert.

Vorzugsweise wird aber der Bewertung ein Bernoulli-Modell zugrunde gelegt. Der Lichtempfänger 26 wird als statistisches System aufgefasst, dessen Lawinenphotodioden ein binärer Zustand zugewiesen ist, nämlich ob sie eine Lawine ausgelöst haben oder nicht. Die Parameter n, p des Bernoulli-Models sind schon bekannt, denn insgesamt stehen in einem Bin noch $F_i$[Bin] Lawinenphotodioden zur Verfügung, und diese werden jeweils mit der Wahrscheinlichkeit pTriggerMedian aktiv.

Folglich gilt für den Mittelwert expValue und die Standardabweichung stdev:

$$expValue(i) = pTriggerMedian * F_i[Bin] \; ;$$

$$stdev(i) = sqrt( F_i[Bin] * pTriggerMedian * ( 1- pTriggerMedian ) ) ;$$

Für eine effiziente Berechnung kann die Wurzel von $F_i$[Bin] mittels Lookup-Table bestimmt werden. Der Term sqrt(pTriggerMedian * (1-pTriggerMedian)) ist unabhängig vom jeweiligen Bin und muss daher nur einmalig berechnet werden.

Damit ist nun über die Standardabweichung ein dynamisch angepasstes, lokales Schwellenkriterium vorhanden. Es muss lediglich noch eine statistische Relevanz sigmaPrefactor vorgegeben werden, d.h. ein der gewünschten Signifikanz entsprechendes Vielfaches der Standardabweichung. Die lokale Schwelle liegt dann bei $S_i$ = expValue(i) + sigmaPrefactor * stdev(i). Findet sich kein Bin, in dem diese Schwelle überschritten ist, so wird dies als objektfreier Überwachungsbereich 12 bewertet.

Zur Reduktion des Rechenaufwands kann dieser Ansatz vereinfacht werden: Beispielsweise kann zur Bestimmung der Schwelle der Erwartungswert und/oder die Standardabweichung des ersten Bins für alle Bins genutzt werden, so dass sich als mögliche Schwellen $S_i$ = expValue(i) + sigmaPrefactor * stdev(i=1), $S_i$ = expValue(i=1) + sigmaPrefactor * stdev(i), beziehungsweise $S_i$ = expValue(i=1) + sigmaPrefactor * stdev(i=1) ergeben. Der letzte Fall entspricht einer dynamisch angepassten Schwelle je Messung, die aber für alle Bins gleich ist.

In einer noch weiter vereinfachten Ausführungsform wird auf die Berechnung der Standardabweichung verzichtet, und die Schwelle wird nur auf Basis der Parameter Erwartungswert expValue(i) und Auslösewahrscheinlichkeit pTrigger[Bin] des Bernoulli-Modells sowie der Hintergrundauslösewahrscheinlichkeit pTriggerMedian bestimmt. Mögliche Definitionen für die Signifikanz wären in Rahmen dieser Vereinfachungen beispielsweise $S_i$ = (pTrigger[Bin] - pTriggerMedian) / (pTriggerMedian + Regularisierung), was durch Multiplikation mit * $F_i$[Bin] äquivalent ist zu $S_i$ = (Anzahl[Bin] - expValue(i)) / ( expValue(i) + Regularisierung), oder die Differenz $S_i$ = pTrigger[Bin] - pTriggerMedian.

Bevorzugte Ausführungsform ist jedoch die beschriebene dynamische Schwelle je Bin basiert auf dem Erwartungswert expValue(i) und der Standardabweichung stdev(i), da erst in diesem Fall sowohl die Abnahme der verfügbaren Lawinenphotodioden $F_i$ als auch die damit verbundene Anpassung der statistischen Fluktuationen korrekt berücksichtigt wird.

Insbesondere bei einem schaltenden Sensor 10, der also einen binären Schaltzustand wechselt, je nachdem, ob ein Objekt in einem gewissen Abstandsbereich erfasst ist oder nicht, kann die statistische Relevanz sigmaPrefactor noch davon abhängig gemacht werden, ob zuvor schon ein Objekt erfasst war oder nicht. Das entspricht einer Schalthysterese, die für ein robustes Schaltverhalten sorgt. Je nach aktuellem Zustand ON="Objekt erfasst" oder OFF "kein Objekt erfasst" wird also statt des einheitlichen sigmaPrefactor ein SIGMA-OFF-TO-ON oder SIGMA-ON-TO-OFF verwendet. Typische Werte sind SIGMA-OFF-TO-ON von ungefähr 12, SIGMA-ON-TO-OFF von ungefähr 6. Für die weiteren

beschriebenen Ausführungsformen $S_i$ ohne sigmaPrefactor ist die Hysterese direkt auf $S_i$ zu beziehen.

Es wurde schon mehrfach erwähnt, dass sich das Maximum der Messereignisse nahe an einer Grenze zwischen zwei Bins befinden kann. Daher werden in einer bevorzugten Ausführungsform zwei oder mehr benachbarte Bins gemeinsam ausgewertet. Dann werden für den Vergleich die gemessenen Einzellichtlaufzeiten der gemeinsam betrachteten Bins aufaddiert. Außerdem wird pTriggerMedian ersetzt durch den Wert 2\*pTriggerMedian-pTriggerMedian\*pTriggerMedian oder in groberer Näherung einfach durch 2\*pTriggerMedian. Letztere Werte gelten für zwei benachbarte Bins und sind bei mehr gemeinsam ausgewerteten Bins entsprechend zu modifizieren. Übrigens kann der Mittelwert über mehrere Bins sehr einfach als gewichtetes Mittel aus den jeweiligen Parametern $N_i$ und $m_i$ der einzelnen Bins berechnet werden. Der Mittelwert steht also für eine mögliche nachgelagerte genauere Auswertung auch dann zur Verfügung, wenn benachbarte Bins gemeinsam ausgewertet werden.

Bisher wurde der Hintergrund hauptsächlich im Rahmen eines Bernoulli-Modells diskutiert. Die Bestimmung eines Messwerts ist jedoch auch ohne Betrachtung des Bernoulli-Modells möglich, beispielsweise durch Vergleich mit dem exponentiellen Hintergrund. Eine mögliche Ausführungsform ist hierbei die Verwendung der Zeitkonstante decayBackground und der Werte $F_i$. Hier umfasst $F_i$ nicht nur Hintergrund, sondern auch potentielle Messereignisse und ist im Übrigen analog wie oben definiert. Bei Berücksichtigung zweier benachbarter Segmente erhält man mittels der Parameter $S(i) = - (2\ \text{decayBackground} + \log(F_{i+1}/F_{i-1}))$ oder $S(i) = - (2\ \text{decayBackground} + \log(F_{i+1}/F_{i-1})) / (2\ \text{decayBackground} + \text{Regularisierung})$ beispielsweise Gütemaße. Der Faktor zwei vor decayBackground entspricht der Breite des berücksichtigten Bereichs, die sich als Differenz der Indices i+1 und i-1 wiederfindet. Übersteigt $S_i$ die Schwelle $S_D$, wurde in der Umgebung des Bins i ein Objekt detektiert und damit der Messwert festgelegt. Dabei ist die Schwelle vorzugsweise mit einer Hysterese entsprechend dem vorherigen Detektionszustand auszulegen.

Die Parameter $S(i)$ berücksichtigen dabei nicht die Zunahme der statistischen Fluktuationen auf dem Quotienten $F_{i+1}/F_{i-1}$ bei kleiner werdendem $F_i$. Eine Charakterisierung, die die Änderung der statistischen Fluktuationen als Folge der Änderung von $F_i$ einbezieht, wie das oben beschriebene Bernoulli-Modell, ist daher bevorzugt, aber wie soeben beschrieben nicht die einzige Möglichkeit.

## Patentansprüche

1. Optoelektronischer Sensor (10) zur Messung der Entfernung zu einem Objekt in einem Überwachungsbereich (12), der einen Lichtsender (20) zum Aussenden von Einzellichtpulsen (22) in den Überwachungsbereich (12), einen Lichtempfänger (26) mit mindestens einer in einem Geiger-Modus betriebenen Lawinenphotodiode zum Empfang der von dem Objekt reflektierten oder remittierten Einzellichtpulse (24), eine Einzellichtlaufzeitmesseinheit (28) zur Bestimmung einer Einzellichtlaufzeit eines Einzellichtpulses (22, 24) als Dauer zwischen einem Sendezeitpunkt des jeweiligen Einzellichtpulses (22) und dessen Empfangszeitpunkt an der Lawinenphotodiode sowie eine Auswertungseinheit (30, 32) aufweist, die dafür ausgebildet ist, aus einer Vielzahl von Einzellichtlaufzeiten einen gemeinsamen Messwert für die Entfernung zu bestimmen, dazu abzuschätzen, wie viele Einzellichtlaufzeiten aufgrund von Hintergrundereignissen in einem Zeitintervall zu erwarten sind, wobei eine exponentiell abfallende Häufigkeit von Hintergrundereignissen angenommen ist, und den gemeinsamen Messwert aus einem Zeitintervall zu bestimmen, in dem signifikant mehr Einzellichtlaufzeiten liegen als erwartet,
**dadurch gekennzeichnet,**
**dass** die Auswertungseinheit (30, 32) weiterhin dafür ausgebildet ist, Parameter zur Beschreibung der exponentiell abfallenden Häufigkeit von Hintergrundereignissen für mehrere Zeitintervalle zu bestimmen, ein Quantil dieser Parameter zu bestimmen und der weiteren Abschätzung der Häufigkeit von Hintergrundereignissen den Parameter entsprechend diesem Quantil zu Grunde zu legen.

2. Sensor (10) nach Anspruch 1,
wobei die Auswertungseinheit (30, 32) dafür ausgebildet ist, eine auf das Aussenden eines Einzellichtpulses (22) folgende Messperiode in Zeitintervalle zu unterteilen.

3. Sensor (10) nach Anspruch 1 oder 2,
wobei die Auswertungseinheit (30, 32) dafür ausgebildet ist, die erwartete Anzahl von Einzellichtlaufzeiten in einem Zeitintervall mit einem Bernoulli-Modell abzuschätzen, in das die maximale Anzahl möglicher Einzellichtlaufzeiten in dem Zeitintervall und eine Hintergrundwahrscheinlichkeit eingeht, dass eine Einzellichtlaufzeit aufgrund eines Hintergrundereignisses in dem Zeitintervall liegt.

4. Sensor (10) nach Anspruch 3,
wobei die Auswertungseinheit (30, 32) dafür ausgebildet ist, aus dem Bernoulli-Modell auch eine Standardabweichung zu berechnen und damit zu bewerten, ob signifikant mehr Einzellichtlaufzeiten in einem Zeitintervall liegen als erwartet.

5. Sensor (10) nach Anspruch 3,
wobei die Auswerteeinheit (30,32) dafür ausgebildet ist, durch Vergleich der Anzahl der gemessenen Einzellichtlaufzeiten in einem Zeitintervall mit der aus dem Bernoulli Modell erwarteten Anzahl von Einzellichtlaufzeiten in einem Zeitintervall zu bewerten, ob signifikant mehr Einzellichtlaufzeiten in einem Zeitintervall liegen als erwartet.

6. Sensor (10) nach Anspruch 4 oder 5,
wobei die Bewertung eine Hysterese aufweist, die stärkere Signifikanz verlangt, wenn in einem Zeitintervall bisher nicht signifikant mehr Einzellichtlaufzeiten festgestellt wurden und nun signifikant mehr Einzellichtlaufzeiten festgestellt werden sollen als für den umgekehrten Fall.

7. Sensor (10) nach einem der vorhergehenden Ansprüche,
wobei die Auswertungseinheit (30, 32) dafür ausgebildet ist, zur Berücksichtigung von Objekten in einer Entfernung nahe an der Grenze eines Zeitintervalls mindestens zwei benachbarte Zeitintervalle gemeinsam auszuwerten.

8. Sensor (10) nach einem der vorhergehenden Ansprüche,
wobei die Auswertungseinheit (30, 32) dafür ausgebildet ist, Einzellichtpulse (22) mit einer Verzögerung auszusenden, um für eine Anfangsphase deren Empfang auszuschließen und so abzuschätzen, wie viele Einzellichtlaufzeiten aufgrund von Hintergrundereignissen in einem Zeitintervall zu erwarten sind.

9. Sensor (10) nach einem der vorhergehenden Ansprüche,
wobei die Auswertungseinheit (30, 32) dafür ausgebildet ist, als Quantil den Median zu verwenden.

10. Sensor (10) nach einem der vorhergehenden Ansprüche,
wobei die Parameter in einem Zeitintervall aus einem Quotienten der gemessenen Einzellichtlaufzeiten in dem Zeitintervall zu der maximalen Anzahl möglicher Einzellichtlaufzeiten in dem Zeitintervall bestimmt werden.

11. Sensor (10) nach einem der vorhergehenden Ansprüche,
wobei der Lichtempfänger (26) eine Vielzahl in einem Geiger-Modus betriebener Lawinenphotodioden und mehrere den Lawinenphotodioden einzeln oder gruppenweise zugeordnete Einzellichtlaufzeitmesseinheiten (28) aufweist, die insbesondere mindestens einen Time-to-Digital-Converter, TDC, aufweisen.

12. Sensor (10) nach einem der vorhergehenden Ansprüche,
wobei die Auswertungseinheit (30,32) dafür ausgebildet ist, für zumindest einige Zeitintervalle einen Mittelwert der Einzellichtlaufzeiten in dem jeweiligen Zeitintervall zu bestimmen.

13. Sensor (10) nach einem der vorhergehenden Ansprüche,
wobei die Auswertungseinheit (30, 32) dafür ausgebildet ist, den gemeinsamen Messwert rekursiv durch Verfeinerung von Zeitintervallen, in denen signifikant mehr Einzellichtlaufzeiten liegen als erwartet, mit zunehmend feinerer Auflösung zu bestimmen.

14. Verfahren zur Messung der Entfernung zu einem Objekt in einem Überwachungsbereich (12), bei dem Einzellichtpulse (22) in den Überwachungsbereich (12) ausgesandt, die von dem Objekt reflektierten oder remittierten Einzellichtpulse (24) mit mindestens einer in einem Geiger-Modus betriebenen Lawinenphotodiode eines Lichtempfängers (26) wieder empfangen, Einzellichtlaufzeiten als Dauer zwischen einem Sendezeitpunkt eines Einzellichtpulses (22) und dessen Empfangszeitpunkt an der Lawinenphotodiode gemessen werden und aus einer Vielzahl von Einzellichtlaufzeiten ein gemeinsamer Messwert für die Entfernung bestimmt wird,
wobei abgeschätzt wird, wie viele Einzellichtlaufzeiten aufgrund von Hintergrundereignissen in einem Zeitintervall zu erwarten sind, wobei eine exponentiell abfallende Häufigkeit von Hintergrundereignissen angenommen ist, und der gemeinsamen Messwert aus einem Zeitintervall bestimmt wird, in dem signifikant mehr Einzellichtlaufzeiten liegen als erwartet,
**dadurch gekennzeichnet,**
**dass** Parameter zur Beschreibung der exponentiell abfallenden Häufigkeit von Hintergrundereignissen für mehrere Zeitintervalle bestimmt werden, ein Quantil dieser Parameter bestimmt und der weiteren Abschätzung der Häufigkeit von Hintergrundereignissen der Parameter entsprechend diesem Quantil zu Grunde gelegt wird.

**Claims**

1. An optoelectronic sensor (10) for measuring the distance of an object in a monitored zone (12), comprising a light transmitter (20) for transmitting individual light pulses (22) into the monitored zone (12), a light receiver (26) having at least one avalanche photodiode operated in Geiger mode for receiving the individual light pulses (24) reflected or remitted by the object, an individual time of flight measurement unit (28) for determining an individual time of flight of an individual light pulse (22, 24) as a duration between a transmission point in time of the respective individual light pulse (22) and its reception point in time at the avalanche photodiode, and an evaluation unit (30, 32) that is configured to determine a common measured value for the distance from a plurality of individual times of flight and to that end to estimate how many individual times of flight are to be expected in a time interval on the basis of background events, with an exponentially decaying frequency of background events being assumed, and to determine the common measured value from a time interval in which there are significantly more individual times of flight than expected, **characterized in that** the evaluation unit (30, 32) is further configured to determine parameters for describing the exponentially decaying frequency of background events for a plurality of time intervals, to determine a quantile of these parameters and to base the further estimation of the frequency of background events on the parameter corresponding to this quantile.

2. The sensor (10) in accordance with claim 1,
   wherein the evaluation unit (30, 32) is configured to divide a measurement period following the transmission of an individual light pulse (22) into time intervals.

3. The sensor (10) in accordance with claim 1 or 2,
   wherein the evaluation unit (30, 32) is configured to estimate the expected number of individual times of flight in a time interval using a Bernoulli model using the maximum number of possible individual times of flight in the time interval and a background probability that an individual time of flight lies within the time interval due to a background event.

4. The sensor (10) in accordance with claim 3,
   wherein the evaluation (30, 32) unit is configured also to calculate a standard deviation from the Bernoulli model and thus to evaluate whether there are significantly more individual times of flight in a time interval than expected.

5. The sensor (10) in accordance with claim 3,
   wherein the evaluation unit (30, 32) is configured to evaluate whether significantly more individual times of flight are present in a time interval than expected by a comparison of the number of measured individual times of flight in a time interval with the number of individual times of flight in a time interval expected from the Bernoulli model.

6. The sensor (10) in accordance with claim 4 or 5,
   wherein the evaluation has a hysteresis that requires greater significance when significantly more individual times of flight were not previously found in a time interval and significantly more individual times of flight should now be found than for the opposite case.

7. The sensor (10) in accordance with any of the previous claims,
   wherein the evaluation unit (30, 32) is configured to evaluate at least two adjacent time intervals together for a taking into account of objects at a distance close to the border of the time interval.

8. The sensor (10) in accordance with any of the previous claims,
   wherein the evaluation unit (30, 32) is configured to transmit individual light pulses (22) with a delay to exclude their reception for an initial phase and thus to estimate how many individual times of flight are to be expected on the basis of background events in a time interval.

9. The sensor (10) in accordance with any of the previous claims,
   wherein the evaluation unit (30, 32) is configured to use the median as the quantile.

10. The sensor (10) in accordance with any of the previous claims,
    wherein the parameters in a time interval are determined from a quotient of the measured individual times of flight in the time interval to the maximum number of possible individual times of flight in the time interval.

11. The sensor (10) in accordance with any of the previous claims,

**EP 3 418 767 B1**

wherein the light receiver (26) has a plurality of avalanche photodiodes operated in Geiger mode and a plurality of individual time of flight measurement units (28) that are associated with the avalanche photodiodes individually or in groups, which in particular comprise at least one time-to-digital converter, TDC.

12. The sensor (10) in accordance with any of the previous claims, wherein the evaluation unit (30, 32) is configured to determine a mean value of the individual times of flight in the respective time interval for at least some time intervals.

13. The sensor (10) in accordance with any of the previous claims, wherein the evaluation unit (30, 32) is configured to determine the common measured value with increasingly finer resolution recursively by refining time intervals in which there are significantly more individual times of flight than expected.

14. A method of measuring the distance from an object in a monitored zone (12), wherein individual light pulses (22) are transmitted into the monitored zone (12), the individual light pulses (24) reflected or remitted by the object are received again by at least one avalanche photodiode of a light receiver (26) operated in a Geiger mode, individual times of flight as a duration between a transmitted point in time of an individual light pulse (22) and its received point in time at the avalanche photodiode are measured and a common measured value for the distance is determined from a plurality of individual times of flight, wherein an estimation is made how many individual times of flight are to be expected in a time interval on the basis of background events, with an exponentially decaying frequency of background events being assumed and with the common measured value being determined from a time interval in which there are significantly more individual times of flight than expected, **characterized in that** parameters for describing the exponentially decaying frequency of background events for a plurality of time intervals are determined, a quantile of these parameters is determined, and the further estimation of the frequency of background events is based on the parameter corresponding to this quantile.

**Revendications**

1. Capteur optoélectronique (10) pour mesurer la distance d'un objet dans une zone à surveiller (12), comportant un émetteur de lumière (20) destiné à émettre des impulsions lumineuses individuelles (22) dans la zone à surveiller (12), un récepteur de lumière (26) comportant au moins une photodiode à avalanche (20) qui fonctionne en mode Geiger et destiné à recevoir les impulsions lumineuses individuelles (24) réfléchies ou réémises par l'objet, une unité de mesure des temps individuels de parcours des impulsions (28) pour déterminer un temps individuel de parcours de lumière d'une impulsion lumineuse individuelle (22, 24) comme durée entre un instant d'émission de l'impulsion lumineuse individuelle (22) respective et son instant de réception au niveau de la photodiode à avalanche, ainsi qu'une unité d'évaluation (30, 32) qui est réalisée pour déterminer, à partir d'une multitude de temps de parcours de lumière individuels, une valeur de mesure commune pour la distance, pour estimer combien de temps de parcours de lumière individuels sont à attendre dans un intervalle de temps en raison d'événements d'arrière-plan, en supposant une fréquence d'événements d'arrière-plan qui décroît exponentiellement, et pour déterminer la valeur de mesure commune à partir d'un intervalle de temps dans lequel se trouvent significativement plus de temps de parcours de lumière individuels que ceux attendus, **caractérisé en ce que** l'unité d'évaluation (30, 32) est en outre réalisée pour déterminer des paramètres pour décrire la fréquence d'événements d'arrière-plan décroissant exponentiellement pendant plusieurs intervalles de temps, pour déterminer un quantile de ces paramètres et pour soumettre ledit paramètre en correspondance dudit quantile à la poursuite de l'estimation de la fréquence d'événements d'arrière-plan.

2. Capteur (10) selon la revendication 1, dans lequel l'unité d'évaluation (30, 32) est réalisée pour subdiviser en intervalles de temps une période de mesure qui suit l'émission d'une impulsion lumineuse individuelle (22).

3. Capteur (10) selon la revendication 1 ou 2, dans lequel l'unité d'évaluation (30, 32) est réalisée pour estimer le nombre attendu de temps de parcours de lumière individuels dans un intervalle de temps à l'aide d'un modèle de Bernoulli prenant en compte le nombre maximal de temps de parcours de lumière individuels possibles dans l'intervalle de temps et une probabilité d'arrière-plan selon laquelle un temps de parcours de lumière individuel se trouve dans ledit intervalle de temps en raison d'un événement d'arrière-plan.

**4.** Capteur (10) selon la revendication 3,
dans lequel l'unité d'évaluation (30, 32) est réalisée pour calculer, à partir du modèle de Bernoulli, également un écart standard et pour ainsi évaluer s'il y a significativement plus de temps de parcours de lumière individuels dans un intervalle de temps que ceux attendus.

**5.** Capteur (10) selon la revendication 3,
dans lequel l'unité d'évaluation (30, 32) est réalisée pour évaluer s'il y a significativement plus de temps de parcours de lumière individuels dans un intervalle de temps que ceux attendus, par une comparaison du nombre de temps de parcours de lumière individuels mesurés dans un intervalle de temps avec le nombre de temps de parcours de lumière individuels dans un intervalle de temps attendus selon le modèle de Bernoulli.

**6.** Capteur (10) selon la revendication 4 ou 5,
dans lequel l'évaluation inclut une hystérésis qui exige une plus grande signification lorsque l'on n'a pas constaté jusqu'à présent significativement plus de temps de parcours de lumière individuels dans un intervalle de temps et qu'il faudra maintenant constater significativement plus de temps de parcours de lumière individuels, que dans le cas contraire.

**7.** Capteur (10) selon l'une des revendications précédentes,
dans lequel l'unité d'évaluation (30, 32) est réalisée pour évaluer conjointement au moins deux intervalles de temps voisins pour prendre en compte des objets à une distance près de la limite d'un intervalle de temps.

**8.** Capteur (10) selon l'une des revendications précédentes,
dans lequel l'unité d'évaluation (30, 32) est réalisée pour émettre des impulsions lumineuses individuelles (22) avec un retard pour exclure leur réception pendant une phase initiale et pour estimer ainsi combien de temps de parcours de lumière individuels sont à atteindre dans un intervalle de temps en raison d'événements d'arrière-plan.

**9.** Capteur (10) selon l'une des revendications précédentes,
dans lequel l'unité d'évaluation (30, 32) est réalisée pour utiliser la médiane en tant que quantile.

**10.** Capteur (10) selon l'une des revendications précédentes,
dans lequel les paramètres dans un intervalle de temps sont déterminés à partir d'un quotient des temps de parcours de lumière individuels mesurés dans un intervalle de temps et du nombre maximal possible de temps de parcours de lumière individuels dans l'intervalle de temps.

**11.** Capteur (10) selon l'une des revendications précédentes,
dans lequel le récepteur de lumière (26) comprend une multitude de photodiodes à avalanche fonctionnant en mode Geiger et plusieurs unités de mesure de temps de parcours de lumière individuels (28) associées individuellement ou par groupe aux photodiodes à avalanche, qui présentent en particulier au moins un convertisseur dit TDC (Time-to-Digital-Converter).

**12.** Capteur (10) selon l'une des revendications précédentes,
dans lequel l'unité d'évaluation (30, 32) est réalisée pour déterminer, au moins pendant quelques intervalles de temps, une valeur moyenne des temps de parcours de lumière individuels dans l'intervalle de temps respectif.

**13.** Capteur (10) selon l'une des revendications précédentes,
dans lequel l'unité d'évaluation (30, 32) est réalisée pour déterminer la valeur de mesure commune de façon récursive par affinement d'intervalles de temps dans lesquels se trouvent significativement plus de temps de parcours de lumière individuels que ceux attendus, avec une résolution qui devient de plus en plus fine.

**14.** Procédé pour mesurer la distance d'un objet dans une zone à surveiller (12), dans lequel des impulsions lumineuses individuelles (22) sont émises dans la zone à surveiller (12), les impulsions lumineuses individuelles (24) réfléchies ou réémises par l'objet sont réceptionnées par au moins une photodiode à avalanche (20) fonctionnant en mode Geiger d'un récepteur de lumière (26), des temps de parcours de lumière individuels (28) sont mesurés comme durée entre un instant d'émission de l'impulsion lumineuse individuelle (22) et son instant de réception au niveau de la photodiode à avalanche, et une valeur de mesure commune pour la distance est déterminée à partir d'une multitude de temps de parcours de lumière individuels, dans lequel on estime combien de temps de parcours de lumière individuels sont à attendre dans un intervalle de temps en raison d'événements d'arrière-plan, en supposant une fréquence d'événements d'arrière-plan qui décroît exponentiellement, et on détermine la valeur de mesure commune à partir d'un intervalle de temps dans lequel se trouvent significativement plus de temps de parcours de lumière individuels que ceux attendus,

**caractérisé en ce que**

on détermine des paramètres pour décrire la fréquence d'événements d'arrière-plan décroissant exponentiellement pendant plusieurs intervalles de temps, on détermine un quantile de ces paramètres et on soumet ledit paramètre en correspondance dudit quantile à la poursuite de l'estimation de la fréquence d'événements d'arrière-plan.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007013714 A1

**In der Beschreibung aufgeführte Nicht-Patentliteratur**

- **VON MILSTEIN et al.** Acquisition algorithm for direct-detection ladars with Geiger-mode avalanche photodiodes. *Applied optics,* 2008, vol. 47 (2), 296-311

- Dead time effects in the indirect time-of-flight measurement with SPADs. **BEER ; MAIK et al.** Circuits and Systems (ISCAS), 2017 IEEE International Symposium on. IEEE, 2017